# EUROPÄISCHE PATENTSCHRIFT

(11) **EP 4 166 480 B1**
(45) Veröffentlichungstag und Bekanntmachung des Hinweises auf die Patenterteilung: **17.04.2024**
(21) Anmeldenummer: 22195864.8
(22) Anmeldetag: 15.09.2022
(51) Int. Cl.: B65G 1/137

(54) **VORRICHTUNG UND VERFAHREN ZUM HÄNGENDEN FÖRDERN VON GEGENSTÄNDEN**
DEVICE AND METHOD FOR SUSPENDED TRANSPORT OF OBJECTS
DISPOSITIF ET PROCÉDÉ DE TRANSPORT SUSPENDU D'OBJETS

(30) Priorität: 13.10.2021 DE 102021211570
(43) Veröffentlichungstag der Anmeldung: 19.04.2023
(73) Patentinhaber: Dürkopp Fördertechnik GmbH, 33719 Bielefeld (DE)
(72) Erfinder: Rehm, Pascal, 33617 Bielefeld (DE)
(74) Vertreter: Rau, Schneck & Hübner Patentanwälte Rechtsanwälte PartGmbB

(56) Entgegenhaltungen:
- DE-A1-102013 206 240
- DE-U1- 29 519 354
- DE-U1- 29 709 547
- US-A1- 2019 367 277

## Beschreibung

Die Erfindung betrifft eine Vorrichtung und ein Verfahren zum hängenden Fördern von Gegenständen.

DE 10 2013 206 240 A1 offenbart eine Hängeförderanlage, mit der Einzelwaren aus einem Warenlager ausgelagert und in mehreren Zwischenspeichern zwischengespeichert werden. Die Zwischenspeicher sind als Umlaufspeicher ausgeführt, die an einer gemeinsamen Fördereinrichtung angeschlossen sind. Einzelwaren, die zu einem Auftrag kommissioniert werden, werden aus dem jeweiligen Zwischenspeicher ausgelagert, in einem Sammelbereich gesammelt, in einem Trennbereich zu Aufträgen kommissioniert und die kommissionierten Aufträge zu einem Warenausgang gefördert. Das Dokument DE 10 2013 206 240 A1 offenbart eine Vorrichtung zum hängenden Fördern von Gegenständen gemäß dem Oberbegriff des unabhängigen Anspruchs 1 und des unabhängigen Anspruchs 11.

Es ist die Aufgabe der vorliegenden Erfindung, die Förderleistung in einer Hängeförderanlage zu erhöhen, insbesondere die Verweildauer der Gegenstände in einem Zwischenspeicher zu reduzieren und/oder die Umschlagzeit eines Zwischenspeichers zu reduzieren.

Diese Aufgabe ist durch eine Vorrichtung mit den Merkmalen des Anspruchs 1 und durch ein Verfahren mit den Merkmalen des Anspruchs 11 gelöst.

Erfindungsgemäß wurde erkannt, dass die Verweildauer von Gegenständen, die jeweils an einem Hängeadapter hängend gefördert werden, in einem als Umlaufspeicher ausgeführten Zwischenspeicher reduziert werden kann, wenn die mittlere Fördergeschwindigkeit, mit der die Gegenstände und/oder die Hängeadapter in dem Zwischenspeicher gefördert werden, gesteigert wird. Die Umschlagzeit für jeden Zwischenspeicher kann dadurch reduziert werden. Als Umschlagzeit wird die Zeit verstanden, die ein Zwischenspeicher benötigt, um alle darin eingelagerten Gegenstände und/oder Hängeadapter einmal umzuschlagen, also insbesondere solange bis ein Gegenstand und/oder ein Hängeadapter zum zweiten Mal in diesem Zwischenspeicher identifiziert wird.

Insbesondere sind mehrere Zwischenspeicher vorgesehen und derart unabhängig voneinander angeordnet, dass die Gegenstände und/oder Hängeadapter eines Zwischenspeichers unabhängig von denen eines anderen Zwischenspeichers aus dem Zwischenspeicher abgeführt, also ausgelagert bzw. ausgeschleust werden können. Um besonders hohe Umschlagraten, also insbesondere geringe Umschlagzeiten in den Zwischenspeichern zu ermöglichen, weist der Umlaufspeicher neben einem Zwischenspeicherförderer einen damit fördertechnisch gekoppelten, aber separat davon ausgeführten Abführförderer auf, der die Gegenstände und/oder Hängeadapter entlang einer Abführstrecke fördert. Diese Förderung entlang der Abführstrecke erfolgt mit einer ersten Fördergeschwindigkeit, die insbesondere eine maximale Fördergeschwindigkeit ist. Um ein zuverlässiges und kollisionsfreies Ausschleusen von Gegenständen und/oder Hängeadaptern aus dem Zwischenspeicher zu gewährleisten, kann der Abführförderer mit einer zweiten Fördergeschwindigkeit betrieben werden, die kleiner ist als die erste Fördergeschwindigkeit.

Wesentlich ist also, dass der Abführförderer mit einer veränderlich einstellbaren Fördergeschwindigkeit betrieben werden kann, wobei insbesondere nur eine erste und nur eine zweite Fördergeschwindigkeit erforderlich sind. Die zweite Fördergeschwindigkeit ist insbesondere durch die Wegstrecke entlang der Abführstrecke limitiert, die ein auszuschleusender Gegenstand und/oder Hängeadapter von einer Identifikationseinheit bis zu einem Weichenelement, an dem der Gegenstand und/oder Hängeadapter ausgeschleust wird, zurücklegt.

Es ist grundsätzlich auch möglich, den Abführförderer mit mehr als zwei verschiedenen Fördergeschwindigkeiten zu betreiben, um die Variabilität im Förderstrom zu erhöhen.

Erfindungsgemäß weist jeder Zwischenspeicher mindestens zwei separate Förderer auf.

Erfindungsgemäß ist es möglich, die Fördergeschwindigkeit entlang der Umlaufspeicherstrecke abschnittsweise veränderlich einzustellen, um damit einen Warenabfluss aus dem jeweiligen Zwischenspeicher sicherzustellen. Damit kann die Förderleistung der jeweiligen Zwischenspeicher und damit die Förderleistung der Vorrichtung und insbesondere der Hängeförderanlage insgesamt gesteigert werden.

Eine Erkenntnis der Erfindung beruht darauf, dass es vorteilhaft ist, wenn die Zwischenspeicher jeweils abschnittsweise mit unterschiedlichen Fördergeschwindigkeiten betrieben werden. Die Gegenstände werden mit der jeweils zweiten Fördergeschwindigkeit des Abführförderers aus dem Zwischenspeicher abgezogen, also ausgeschleust. Die Gegenstände in den anderen Zwischenspeichern können mit der ersten Fördergeschwindigkeit umgeschlagen werden. Dadurch ergibt sich eine entsprechend erhöhte Fördergeschwindigkeit in den anderen Zwischenspeichern, insbesondere für die darin verbleibenden Gegenstände.

Erfindungsgemäß ist es möglich, die Umschlagsleistung in den Zwischenspeichern auf mindestens 10000 Gegenstände pro Stunde, insbesondere auf mindestens 12000 Gegenstände pro Stunde, insbesondere auf mindestens 14000 Gegenstände pro Stunde und insbesondere auf mindestens 15000 Gegenstände pro Stunde zu steigern. Dadurch ergibt sich eine reduzierte Zugriffszeit auf die einzelnen Gegenstände. Zusätzlich oder alternativ ist es möglich, bei gleichbleibender Zugriffszeit die Anzahl der Zwischenspeicher in der Vorrichtung zu reduzieren, wodurch sich ein Einsparpotenzial hinsichtlich Investitionen und Platzbedarf ergibt. Eine derartige Vorrichtung ist kostensparend und wirtschaftlich vorteilhaft.

Gegenstände im Sinne der Erfindung sind Hängewaren, insbesondere Bekleidung, die beispielsweise mit einem Kleiderbügel an jeweils einem Hängeadapter hängend gefördert werden. Ein Gegenstand kann auch eine sogenannte Liegeware sein, die in einer Fördertasche, die an dem Hängeadapter hängend gefördert wird, transportierbar ist. Eine derartige Fördertasche und ein entsprechender Hängeadapter sind aus DE 10 2018 201 676 A1 bekannt. Bezüglich Details der Ausgestaltung der Fördertasche und des Hängeadapters wird hierauf ausdrücklich verwiesen.

Die Vorrichtung weist mehrere Zwischenspeicher auf, insbesondere mindestens fünf, insbesondere mindestens zehn, insbesondere mindestens zwanzig, insbesondere mindestens dreißig, insbesondere mindestens fünfzig und insbesondere bis zu einhundert. Es können auch weniger als fünf Zwischenspeicher vorgesehen sein. Die Zwischenspeicher sind jeweils als Umlaufspeicher mit einer geschlossenen Umlaufspeicherstrecke ausgeführt.

Insbesondere weist jeder Zwischenspeicher eine Vereinzelungseinheit auf, die entlang der Umlaufspeicherstrecke insbesondere an einem Übergang des Zwischenspeicherförderers zu dem Abführförderer angeordnet ist. Die Vereinzelungseinheit dient zum Vereinzeln der Gegenstände für den Abführförderer und insbesondere für die im Bereich des Abführförderers angeordnete Identifikationseinheit. Durch das Vereinzeln der Gegenstände und/oder Hängeadapter, können diese zuverlässig mittels der stromabwärts der Vereinzelungseinheit angeordneten Identifikationseinheit identifiziert werden.

Die Identifikationseinheit weist insbesondere ein Lesegerät auf, das geeignet ist, ein Identifikationsmittel zum Identifizieren der Gegenstände zu lesen. Das Identifikationsmittel ist insbesondere an dem Hängeadapter angebracht oder in dem Hängeadapter integriert angeordnet. Das Identifikationsmittel ist insbesondere ein optisch lesbarer Code, insbesondere ein Strichcode oder ein QR-Code, oder ein elektronischer Speicherchip, insbesondere ein RFID-Chip. Entsprechend ist die Identifikationseinheit als Codeleser oder Chipleser ausgeführt. Insbesondere ermöglicht die Identifikationseinheit ein kontaktloses Erfassen von Daten, die mit dem Identifikationsmittel verknüpft oder darin gespeichert sind. Die Identifikationseinheit ist insbesondere der Vereinzelungseinheit stromaufwärts angeordnet. Insbesondere ist es möglich, in Abhängigkeit der mittels der Identifikationseinheit ausgelesenen Daten die Fördergeschwindigkeit für den Abführförderer festzulegen.

Es wurde gefunden, dass die veränderliche Einstellung der Fördergeschwindigkeiten am Abführförderer besonders dann vorteilhaft ist, wenn die Ausschleusequote relativ gering ist und insbesondere höchstens 50 %, insbesondere höchstens 30 %, insbesondere höchstens 20 %, insbesondere höchstens 10 %, insbesondere höchstens 8 %, insbesondere höchstens 6 %, insbesondere höchstens 5 %, insbesondere höchstens 3 %, insbesondere höchstens 1 % und insbesondere mindestens 0,1 % beträgt. Als Ausschleusequote wird der Anteil der auszuschleusenden Gegenstände bezogen auf alle Gegenstände in diesem Zwischenspeicher verstanden.

Die Erfindung bezieht sich also insbesondere auf Zwischenspeicher, deren Gegenstände und/oder Hängeadapter mit geringer Wahrscheinlichkeit an dem Weichenelement ausgeschleust werden. Das Weichenelement bildet einen sogenannten Umschlagpunkt. Es wurde gefunden, dass die Förderrate, also die Anzahl der geförderten Gegenstände und/oder Hängeadapter mit dem Abführförderer hinsichtlich der Förderrate der Zwischenspeichers limitierend ist. Es wurde ferner erkannt, dass es für die Förderrate des Zwischenspeichers und damit für dessen Umschlagzeit vorteilhaft ist, die Förderrate in diesem Bereich zu erhöhen und insbesondere unabhängig von der Förderrate des Zwischenspeicherförderers auszuführen.

Eine Vorrichtung gemäß Anspruch 2 vereinfacht die Zuführung von Gegenständen in die Zwischenspeicher. Insbesondere ist ein Zuführförderer ähnlich und insbesondere identisch zu dem Abführförderer ausgeführt. Der Aufbau des Zuführförderers kann gegenüber dem des Abführförderers vereinfacht sein. Insbesondere ist es nicht erforderlich, den Zuführförderer mit unterschiedlich festlegbaren Fördergeschwindigkeiten auszuführen. Es ist ausreichend, wenn der Zuführförderer mit einer, insbesondere konstanten, Fördergeschwindigkeit funktioniert. Es ist grundsätzlich auch denkbar, dass der Zuführförderer passiv ausgeführt ist, also die Gegenstände und/oder Hängeadapter beispielsweise über eine geneigt angeordnete Förderschiene dem Zwischenspeicher zugeführt werden, also im Sinne eines gravimetrischen Antriebs.

Eine Vorrichtung gemäß Anspruch 3 ermöglicht eine zuverlässige Identifikation der auszuschleusenden Gegenstände. Insbesondere ist die Identifikationseinheit stromabwärts der Vereinzelungseinheit angeordnet, sodass die vereinzelten, mit erforderlichem Transportabstand zueinander transportierten Gegenstände an der Identifikationseinheit vorbeigeführt werden. Die Identifikationseinheit ist insbesondere im Bereich des Abführförderers und insbesondere entlang der Abführstrecke angeordnet. Die Identifikationseinheit ist insbesondere stromaufwärts des Weichenelements und insbesondere benachbart zu dem Weichenelement angeordnet. Je kürzer der Abstand entlang der Abführstrecke zwischen der Identifikationseinheit und dem Weichenelement ist, desto geringer ist die Zeitspanne, innerhalb derer die erste Fördergeschwindigkeit zum Ausschleusen eines Gegenstands auf die zweite Fördergeschwindigkeit abgesenkt werden muss. Das Zeitintervall, in dem der Zwischenspeicher mit der zweiten Fördergeschwindigkeit betrieben wird, ist reduziert. Die integrale Förderrate der Anlage ist dadurch erhöht.

Eine Vorrichtung gemäß Anspruch 4 vereinfacht die Anpassung der Fördergeschwindigkeit des Abführförderers. Insbesondere ist eine automatisierte und insbesondere geregelte Anpassung der Fördergeschwindigkeit ermöglicht.

Eine Vorrichtung gemäß einem der Ansprüche 5 bis 9 ermöglicht eine durchgängige und insbesondere automatisierte Abwicklung eines Warenstroms in einer Hängeförderanlage.

Eine Vorrichtung gemäß Anspruch 10 ermöglicht eine entkoppelte Zu- und Abführung von Gegenständen und/oder Hängeadaptern in den Zwischenspeicher bzw. aus dem Zwischenspeicher. Insbesondere ist jeder Zwischenspeicher mit einer separaten Zuführstrecke und einer separaten Abführstrecke an die Fördertechnik der Hängeförderanlage gekoppelt. Die Zuführstrecke und/oder die Abführstrecke können jeweils eigene Förderer aufweisen.

Ein Verfahren gemäß Anspruch 11 weist im Wesentlichen die Vorteile der Vorrichtung auf, worauf hiermit verwiesen wird.

Ein Verfahren gemäß Anspruch 12 gewährleistet die zuverlässige Identifikation der Gegenstände im Zwischenspeicher.

Ein Verfahren gemäß Anspruch 13 ermöglicht eine automatisierte, insbesondere zuverlässige, Steigerung der integralen Förderleistung der Vorrichtung.

Sowohl die in den Patentansprüchen angegebenen Merkmale als auch die in der nachfolgenden Ausführungsform einer erfindungsgemäßen Vorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf. Zusätzliche Merkmale, vorteilhafte Ausgestaltungen und Einzelheiten der Erfindung ergeben sich aus der nachfolgenden Beschreibung eines Ausführungsbeispiels anhand der Zeichnung. Es zeigen:

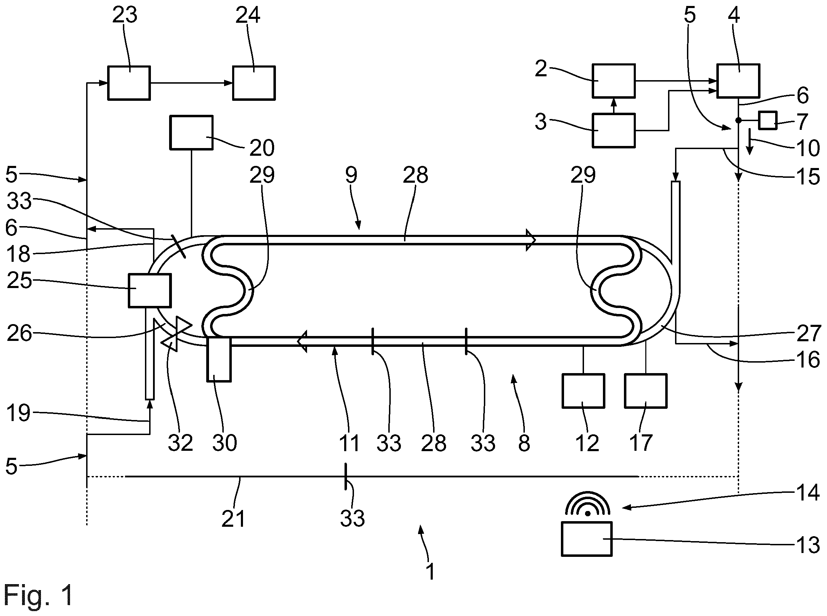

- Fig. 1: eine schematisierte Darstellung einer erfindungsgemäßen Vorrichtung mit mehreren Zwischenspeichern.

Eine in Fig. 1 rein schematisch dargestellte und als Ganzes mit 1 gekennzeichnete Vorrichtung dient zum hängenden Fördern von Gegenständen. Die Vorrichtung 1 ist insbesondere eine Hängeförderanlage. Die Gegenstände werden auch als Einzelwaren bezeichnet. Die nicht näher dargestellten Gegenstände werden an rein schematisch dargestellten Hängeadaptern 33 entlang der Vorrichtung 1 gefördert.

Die Vorrichtung 1 umfasst ein Warenlager 2, in dem die Gegenstände eingelagert sein. Das Warenlager 2 kann als manuelles Lager oder als automatisches Lager ausgeführt sein. Die Vorrichtung 1 weist ferner einen Wareneingang 3 auf, über den die Gegenstände der Vorrichtung 1, insbesondere von extern, zugeführt werden. Dem Wareneingang 3 können auch Retourenwaren zugeführt werden. Der Wareneingang 3 ist fördertechnisch mit dem Warenlager 2 verbunden. Die fördertechnische Verbindung ist beispielsweise durch ein Förderband oder durch eine manuelle Zubringung der Gegenstände, die insbesondere auch in Gebinden im Wareneingang 3 vorliegen können, ausgeführt.

Die Vorrichtung 1 umfasst ferner eine Aufgabestation 4, an der die Gegenstände beispielsweise in eine Fördertasche aufgegeben werden. Es wird insbesondere genau ein Gegenstand in eine Fördertasche aufgegeben. Die Fördertaschen werden also jeweils mit einem Gegenstand beladen. Die Aufgabestation 4 wird auch als Beladestation bezeichnet. Die Gegenstände, die in die Fördertaschen beladen werden, werden auch als Liegeware bezeichnet. Die Liegeware wird mittels der Fördertaschen in der Vorrichtung 1 an den Hängeadaptern 33 gefördert. Zusätzlich oder alternativ kann an der Aufgabestation 4 auch sogenannte Hängeware aufgegeben werden. Hängeware ist beispielsweise ein Gegenstand, der insbesondere an einem Kleiderbügel hängend, insbesondere Bekleidung, mittels eines Hängeadapters 33 gefördert wird.

Die Aufgabestation 4 ist mit dem Wareneingang 3 fördertechnisch verbunden. Es ist deshalb möglich, Gegenstände aus dem Wareneingang 3 direkt zu der Aufgabestation 4 zu fördern. Die Aufgabestation 4 ist insbesondere auch fördertechnisch mit dem Warenlager 2 fördertechnisch verbunden. Gegenstände können aus dem Warenlager 2 unmittelbar zu der Aufgabestation 4 gefördert werden.

Es ist möglich, dass zwischen der Aufgabestation 4 und dem Wareneingang 3 bzw. zwischen der Aufgabestation 4 und dem Warenlager 2 keine fördertechnische Verbindung besteht. In diesem Fall werden die Gegenstände von dem Warenlager 2 bzw. dem Wareneingang 3 manuell zu der Aufgabestation 4 gefördert, beispielsweise mittels Federbodenwagen oder Palettenhubwagen. In der Vorrichtung 1 werden die Fördertaschen und/oder die Kleiderbügel an den Hängeadaptern 33 hängend jeweils vereinzelt gefördert. Dazu dient eine Fördertechnik 5, die eine Förderschiene 6 und insbesondere einen Förderantrieb 7 aufweist.

Den Gegenständen ist jeweils ein Identifikationsmittel zugeordnet, das insbesondere an dem Hängeadapter 33 angeordnet oder in dem Hängeadapter 33 integriert ausgeführt ist. Das Identifikationsmittel kann ein Daten-Chip, insbesondere ein RFID-Chip, oder ein Identifikations-Code, insbesondere ein Strichcode oder ein QR-Code, sein. In dem jeweiligen Identifikationsmittel sind eindeutige Identifikationsdaten gespeichert. Die Identifikationsdaten werden auch als Hängeadapterdaten bezeichnet. Mittels der Identifikationsdaten ist der jeweilige Hängeadapter 33 mit dem daran hängend geförderten Gegenstand eindeutig identifizierbar. Insbesondere ist der Förderpfad des Gegenstands in der Vorrichtung 1 steuerbar. Insbesondere ist es möglich, den Förderpfad der Gegenstände individualisiert entlang der Vorrichtung 1 nachzuverfolgen und zu steuern. Dazu weist die Vorrichtung 1 mehrere Identifikationseinheiten auf, die insbesondere an Verzweigungsstellen der Vorrichtung 1 stromaufwärts angeordnet sind.

Zur hängenden Förderung sind die Gegenstände mittels der Fördertaschen und/oder der Kleiderbügel jeweils mit einem Hängeadapter 33 formschlüssig verbunden. Insbesondere weisen die Fördertaschen und/oder die Kleiderbügel jeweils einen Haken auf, der in eine entsprechende Ausnehmung des Hängeadapters 33 einhängbar ist. Alternativ kann auch der Hängeadapter 33 hakenförmig ausgeführt sein und insbesondere in eine Ausnehmung der Fördertasche und/oder des Kleiderbügels eingehängt werden.

Die Vorrichtung 1 umfasst eine Sortiereinheit 8 zum Sortieren der Gegenstände, also zum Verändern der Reihenfolge der Gegenstände im Warenstrom, der insbesondere von der Aufgabestation 4 ausgeht. Die Sortiereinheit 8 weist mehrere Zwischenspeicher 9 auf, wobei in Fig. 1 aus Darstellungsgründen lediglich ein Zwischenspeicher 9 dargestellt ist. Die Zwischenspeicher 9 sind entlang einer Förderrichtung 10 der Fördertechnik 5 hintereinander, also in Reihe angeordnet. Es ist auch möglich, die Zwischenspeicher 9 entlang der Förderrichtung 10 parallel zueinander anzuordnen. In diesem Fall sind die Zwischenspeicher 9 unabhängig voneinander fördertechnisch mit der Aufgabestation 4 verbunden.

Insbesondere weist die Vorrichtung 1 mindestens fünf, insbesondere mindestens zehn, insbesondere mindestens fünfzehn, insbesondere mindestens zwanzig, insbesondere mindestens dreißig, insbesondere mindestens vierzig und insbesondere mindestens fünfzig Zwischenspeicher 9 auf. Die Sortiereinheit 8 und insbesondere die Zwischenspeicher 9 sind mit der Aufgabestation 4 über die Fördertechnik 5 fördertechnisch verbunden.

Die Sortiereinheit 8 und insbesondere die Zwischenspeicher 9 dienen insbesondere zum Zusammenstellen der Gegenstände zu logischen Gruppen. Insbesondere werden die Gegenstände zu Gruppen von Gegenständen zusammengefasst, die einen Auftrag bilden. In der Sortiereinheit 8 können Gruppen von Gegenständen gebildet werden, die Teil eines Auftrags sind.

Die Zwischenspeicher 9 sind jeweils als Umlaufspeicher ausgeführt mit einer geschlossenen Umlaufspeicherstrecke 11 und mit einem Zwischenspeicherförderer 12 zum Fördern der Gegenstände entlang der Umlaufspeicherstrecke 11.

Die Umlaufspeicherstrecke 11 weist zwei Linearabschnitte 28 auf, die an ihren Enden jeweils mit dem Anfang des anderen Linearabschnitts 28 über Verbindungsabschnitte 29 miteinander verbunden sind. Die Linearabschnitte 28 und die Verbindungsabschnitte 29 sind entlang der Förderrichtung der Umlaufspeicherstrecke 11 jeweils abwechselnd angeordnet. Die Linearabschnitte 28 und die Verbindungsabschnitte 29 bilden die Umlaufspeicherstrecke 11, die insbesondere in sich geschlossen ist. Die Umlaufspeicherstrecke 11 ermöglicht eine endlose, kreisende Förderung der Gegenstände in dem Zwischenspeicher 9. Der Zwischenspeicher 9 wird auch als Speicherkreisel oder als Endlosförderer bezeichnet. Der Zwischenspeicherförderer 12 weist eine endlos umlaufende Antriebskette aus. Die Antriebskette ist in Fig. 1 nicht dargestellt und verläuft entlang der Linearabschnitte 28 und der Verbindungsabschnitte 29.

Die Vorrichtung 1 umfasst eine zentrale Regelungseinheit 13, die eine Signalverbindung mit anderen Komponenten der Vorrichtung 1 ermöglicht. Die Signalverbindung kann kabelgebunden oder kabellos erfolgen. Eine kabellose, funkgebundene Signalverbindung ist in Fig. 1 mit einem Symbol 14 zur Funkübertragung dargestellt.

Die Fördertechnik 5 ist jeweils mittels einer Zuführ-Koppelstrecke 15 an einen der Zwischenspeicher 9 fördertechnisch gekoppelt. Insbesondere ist jeder Zwischenspeicher 9 mit genau einer Zuführ-Koppelstrecke 15 an die Fördertechnik 5 und insbesondere an die Förderschiene 6 gekoppelt. Gegenstände und/oder Hängeadapter 33, die einem Zwischenspeicher 9 zugeführt werden sollen, werden über die Zuführ-Koppelstrecke 15 von der Fördertechnik 5 ausgeschleust und dem jeweiligen Zwischenspeicher 9 zugeführt.

Es ist auch grundsätzlich denkbar, dass mehrere Zwischenspeicher 9 über eine gemeinsame Koppelstrecke an die Fördertechnik 5 angeschlossen sind und/oder dass mehrere Zwischenspeicher unmittelbar an die Fördertechnik 5 angeschlossen sind. In diesem Fall bildet die Fördertechnik 5 einen gemeinsamen Kopfförderer für die Zwischenspeicher 9.

Die Zuführ-Koppelstrecke 15 ist mit einer Zuführstrecke 27 fördertechnisch gekoppelt. Die Zuführstrecke 27 ist mit einem Zuführförderer 17 verbunden, der eine Zuführung der Gegenstände und/oder Hängeadapter 33 in den Zwischenspeicher 9, insbesondere in die Umlaufspeicherstrecke 11 gewährleistet.

Es versteht sich, dass die Fördertechnik 5 und insbesondere die Förderschiene 6 stromabwärts der Förderrichtung 10 bezüglich der Zuführ-Koppelstrecke 15 fortgeführt ist, um insbesondere eine Ankopplung verschiedener Zwischenspeicher 9 zu ermöglichen. Es kann insbesondere vorgesehen sein, dass die Zuführstrecke 27 über eine Rückführ-Koppelstrecke 16 an die Fördertechnik 5 angebunden ist, also rückgeführt ist.

Der Zwischenspeicher 9 weist eine Abführstrecke 26 mit einem Abführförderer 20 auf, wobei sich an die Abführstrecke 26 eine Abführ-Koppelstrecke 18 koppelt. Über die Abführ-Koppelstrecke 18 ist der Zwischenspeicher 9 an die Fördertechnik 5 der Vorrichtung 1, insbesondere an eine weitere Förderschiene 6, fördertechnisch gekoppelt.

Die Abführstrecke 26 und die Zuführstrecke 27 sind jeweils im Wesentlichen U-förmig ausgeführt und verbinden jeweils das Ende eines Linearabschnitts 28 mit dem Anfang des jeweils anderen Linearabschnitts 28. Die beiden U-förmigen Strecken 26 und 27 sowie die dazwischen angeordneten Linearabschnitte 28 bilden einen länglichen Umlaufspeicher.

Es ist insbesondere möglich, dass die Fördertechnik 5 über eine zusätzliche Zuführ-Koppelstrecke 19 im Bereich der Abführstrecke 26 mit dem Zwischenspeicher 9 fördertechnisch gekoppelt ist. Es ist also insbesondere möglich, dass über diese zusätzliche Zuführ-Koppelstrecke 19 Gegenstände und/oder Hängeadapter 33 in den Zwischenspeicher 9 eingelagert werden.

Die Zuführ-Koppelstrecke 15 und die Abführ-Koppelstrecke 18 sind entlang der jeweiligen Umlaufspeicherstrecke 11 beabstandet und insbesondere gegenüberliegend an die Zwischenspeicher 9 fördertechnisch gekoppelt.

Der Zwischenspeicherförderer 12, der Zuführförderer 17 und der Abführförderer 20 sind unabhängig voneinander ausgeführt und jeweils mit einem Streckenabschnitt unmittelbar verbunden. Die Abführstrecke 26, die Umlaufspeicherstrecke 11 und die Zuführstrecke 27 sind fördertechnisch miteinander gekoppelt. Die in dem Zwischenspeicher 9 umlaufend geförderten Gegenstände und/oder Hängeadapter 33 können von der einen Förderstrecke auf die stromabwärts nachfolgende Förderstrecke übergeben, wobei innerhalb der jeweiligen Förderstrecke 11, 26, 27 die Förderung mittels des jeweils dort existierenden Förderers, also der mittels der von dem jeweiligen Förderer 11, 17, 20 realisierten Fördergeschwindigkeit erfolgt.

Es ist insbesondere möglich, dass die bezüglich der Zwischenspeicher 9 einander gegenüberliegend angeordneten Abschnitte der Fördertechnik 5 über eine Rückführ-Förderstrecke 21 unmittelbar fördertechnisch gekoppelt ist. Es können auch mehrere Rückführ-Förderstrecken 21 vorgesehen sein, insbesondere zwischen zwei benachbart angeordneten Zwischenspeichern 9 jeweils eine Rückführ-Förderstrecke 21. Die Rückführ-Förderstrecken ermöglichen insbesondere eine Umgehung der Zwischenspeicher 9, also eine unmittelbare Förderung von Gegenständen und/oder Hängeadaptern 33 vorbei an der Sortiereinheit und insbesondere vorbei an den Zwischenspeichern. Die Förderrate ist dadurch erhöht.

Die Sortiereinheit 8 ist mittels der Fördertechnik 5 mit mindestens einer Packstation 23 fördertechnisch verbunden. Die mindestens eine Packstation 23 wird auch als Packplatz bezeichnet. Die Vorrichtung 1 weist insbesondere mehrere Packplätze 23 auf, insbesondere mindestens fünf, mindestens zehn, insbesondere mindestens zwanzig und insbesondere mindestens fünfzig Packplätze 23. An den Packplätzen 23 werden die Gegenstände entladen, also aus den Fördertaschen entnommen und/oder die Kleiderbügel von den Hängeadaptern 33 abgenommen und, insbesondere manuell, gepackt. Die Gegenstände werden insbesondere auftragsrein gepackt. An der Packstation 23 werden die Gegenstände zu Aufträgen gepackt. In Fig. 1 ist aus Darstellungsgründen lediglich eine Packstation 23 dargestellt. Die Vorrichtung 1 kann mehrere, insbesondere mindestens fünf, insbesondere mindestens zehn und insbesondere bis zu einhundert Packstationen 23 aufweisen. Die Packstationen 23 können entlang der Förderrichtung parallel und/oder in Reihe zueinander angeordnet sein. Mit den Packstationen 23 ist fördertechnisch ein Warenausgang 24 gekoppelt, an dem die zu Aufträgen zusammengefassten Gegenstände aus der Vorrichtung 1 abgeführt werden.

Nachfolgend werden Aufbau und Funktion der Zwischenspeicher 9 näher erläutert. Die Zwischenspeicher 9 sind jeweils identisch ausgeführt, weshalb die nachfolgende Erläuterung für einen der Zwischenspeicher 9 stellvertretend erfolgt.

Die Zuführ-Koppelstrecke 15 ist insbesondere unmittelbar mit der Zuführstrecke 27 fördertechnisch gekoppelt. Insbesondere für den Fall, dass stromabwärts des Zwischenspeichers 9 sich an die Zuführstrecke 27 die Rückführ-Koppelstrecke 16 anschließt, kann ein in Fig. 1 nicht mehr dargestelltes Einschleuseelement im Bereich der Zuführstrecke 27 angeordnet sein, um Gegenstände und/oder Hängeadapter 23, die in den Zwischenspeicher 9 eingelagert werden sollen, entsprechend einzuschleusen.

An der Abführstrecke 26 ist, insbesondere mittig, ein Weichenelement 25 angeordnet. Das Weichenelement 25 dient zum Ausschleusen von Gegenständen und/oder Hängeadaptern 33 aus dem Zwischenspeicher 9, insbesondere über die Abführ-Koppelstrecke 18 in die Fördertechnik 5. In Abhängigkeit einer jeweiligen Schaltstellung des Weichenelements 25 werden die Gegenstände und/oder Hängeadapter 33 entlang der Abführstrecke 26, also halbkreisförmig von dem einen Linearabschnitt 28 zu dem gegenüberliegenden Linearabschnitt 28 gefördert oder von der Abführstrecke 26 auf die Abführ-Koppelstrecke 18 aus dem Zwischenspeicher 9 ausgeschleust. Im erstgenannten Fall erfolgt also eine umlaufende Förderung des Gegenstands bzw. des Hängeadapters 33 in dem Zwischenspeicher 9.

Entlang der Fördertechnik 5 sind insbesondere mehrere Förderstrecken-Identifikationseinheiten 34 angeordnet. Die Förderstrecken-Identifikationseinheiten 34 ermöglichen das Identifizieren der Hängeadapter 33 zum Zuführen von Hängeadaptern 33 in die Zwischenspeicher 9.

Die Abführstrecke 26 und die Zuführstrecke 27 koppeln jeweils an Verbindungsstellen zwischen einem Linearabschnitt 28 und einem Verbindungsabschnitt 29 an.

Der Zwischenspeicher 9 weist eine Vereinzelungseinheit 30 auf. Die Vereinzelungseinheit 30 ist jeweils im Bereich des Endes eines Linearabschnitts 28 an der Umlaufspeicherstrecke 11 angeordnet. Die Vereinzelungseinheit 30 ist der Abführstrecke 26 vorgelagert, also stromaufwärts zu der Abführstrecke 26 angeordnet.

Stromabwärts der Vereinzelungseinheit 30 ist eine Identifikationseinheit 32 angeordnet, insbesondere an der Abführstrecke 26, also im Bereich des Abführförderers 20. Die Identifikationseinheit 32 dient zum Identifizieren der Gegenstände, insbesondere mittels der Identifikationsmittel der Hängeadapter 33. Insbesondere kann die Identifikationseinheit 32 diejenigen Gegenstände und/oder Hängeadapter 33 identifizieren, die aus dem Zwischenspeicher 9 ausgeschleust werden sollen. Die Identifikationseinheit 32 ist stromaufwärts des Weichenelements 25 angeordnet.

Die Regelungseinheit 13 steht insbesondere mit dem Zuführförderer 17, dem Abführförderer 20, mit der Vereinzelungseinheit 30, mit dem Weichenelement 25 und/oder mit der Identifikationseinheit 32 in Signalverbindung, insbesondere in bidirektionaler Signalverbindung.

Nachfolgend wird anhand von Fig. 1 ein Verfahren zum Fördern der Gegenstände in der Vorrichtung 1 näher erläutert.

Gegenstände werden aus dem Warenlager 2 und/oder dem Wareneingang 3 an der Aufgabestation 4 in Fördertaschen und/oder an Kleiderbügeln hängend an den Hängeadaptern 33 aufgegeben. Von der Aufgabestation 4 werden die Gegenstände entlang der Fördertechnik 5 gefördert.

Zum Sortieren und insbesondere zum Kommissionieren der Gegenstände zu Aufträgen, werden die Gegenstände in den Zwischenspeichern 9 zwischengespeichert und/oder sortiert. Dazu werden die Hängeadapter 33 mittels der Identifikationseinheiten, insbesondere mittels der Förderstrecken-Identifikationseinheiten 34 entlang der ersten Fördertechnik 5 identifiziert und einem der Zwischenspeicher 9 zugeführt.

Der Gegenstand wird in dem Zwischenspeicher 9 solange, insbesondere mehrfach umlaufend, gefördert, bis der Gegenstand zur Bildung eines Auftrags an einer der Packstationen 23 angefordert wird.

Ein Gegenstand wird an der Vereinzelungseinheit 30 vereinzelt, von dem Linearabschnitt 28 auf die Abführstrecke 26 übergeben und mittels der Identifikationseinheit 32 identifiziert, wenn der identifizierte Gegenstand aus dem Zwischenspeicher 9 ausgeschleust werden soll, wird ein entsprechendes Signal an die Regelungseinheit 13 und von dort an das Weichenelement 25 übertragen. Es ist auch denkbar, dass das Signal von der Identifikationseinheit 32 an das Weichenelement 25 übertragen wird. Wenn der identifizierte Gegenstand das Weichenelement 25 passiert, wird das Weichenelement 25 in eine entsprechende Ausschleusestellung verlagert, um den Gegenstand aus dem Zwischenspeicher 9, insbesondere über die Abführ-Koppelstrecke 18, in die Fördertechnik 5 auszuschleusen.

Dabei ist wesentlich, dass die Abführstrecke 26 einen eigenen, separaten Abführförderer 20 aufweist. Immer dann, wenn gerade kein Gegenstand aus dem Zwischenspeicher 9 auszuschleusen ist, können die vereinzelten Hängeadapter 33 entlang der Abführstrecke 26 mit einer ersten Fördergeschwindigkeit gefördert werden, die insbesondere maximal ist. Die erste Fördergeschwindigkeit vi wird insbesondere lediglich durch die Antriebsleistung des Abführförderers 20 beschränkt. In diesem Zustand werden die Gegenstände und/oder Hängeadapter 33 mit einer hohen Förderrate entlang der Abführstrecke 26 gefördert, also von dem einen Linearabschnitt 28 auf den anderen Linearabschnitt 28 überführt.

Sobald ein auszuschleusender Gegenstand identifiziert worden ist, wird der Abführförderer 20 mit einer reduzierten, zweiten Fördergeschwindigkeit betrieben. Die zweite Fördergeschwindigkeit v₂ gewährleistet, dass die Reaktionszeit des Weichenelements 25 ausreicht, um den Gegenstand aus dem Zwischenspeicher 9 auszuschleusen. Die zweite Fördergeschwindigkeit ergibt sich insbesondere aus der Reaktionszeit des Weichenelements und des Förderabstands der Hängeadapter 33, der durch die Vereinzelungseinheit 30 bereitgestellt wird. Wesentlich ist, dass die zweite Fördergeschwindigkeit v₂ kleiner ist als die erste Fördergeschwindigkeit vi.

Es hat sich insbesondere gezeigt, dass ein Verfahren vorteilhaft ist, bei dem ein minimaler Förderabstand der Hängeadapter 33 identifiziert wird. Dieser minimale Förderabstand zwischen zwei Hängeadaptern 33 ist insbesondere abhängig von der Fördergeschwindigkeit. Die Fördergeschwindigkeit, insbesondere im Bereich der Vereinzelungseinheit 30, beträgt insbesondere zwischen 100 mm/s und 800 mm/s, insbesondere zwischen 250 mm/s und 500 mm/s. Ein Transportabstand benachbarter Hängeadapter 33 beträgt insbesondere zwischen 100 mm und 200 mm und insbesondere zwischen 120 mm und 180 mm.

Es wurde erkannt, dass in Abhängigkeit davon, ob ein Hängeadapter 33 aus dem Zwischenspeicher 9 auszuschleusen ist, die Fördergeschwindigkeit des Abführförderers 20, also die Fördergeschwindigkeit, mit der die Gegenstände aus den Zwischenspeichern 9 abgezogen werden, veränderlich festgelegt werden kann. Die Fördergeschwindigkeit wird insbesondere derart reduziert, dass eine sichere und kollisionsfreie Ausschleusung des Gegenstands mittels des Weichenelements 25 erfolgen kann. Diese Reduktion der Fördergeschwindigkeit erfolgt mittels des Zwischenspeicherförderers 12.

Wenn mittels der Identifikationseinheit 32 Gegenstände identifiziert werden, die nicht zur Ausschleusung anstehen, also in dem Zwischenspeicher 9 verbleiben und umlaufend gefördert werden sollen, wird die Fördergeschwindigkeit des Zwischenspeicherförderers wieder erhöht, insbesondere auf einen Maximalwert. Dadurch kann die Umschlagleistung in dem Zwischenspeicher 9 erhöht werden.

Der Mindestförderabstand zwischen der Identifikationseinheit 32 und dem Weichenelement 25 ergibt sich durch die Verarbeitungsgeschwindigkeit des Lesesignals, der maximalen Transportgeschwindigkeit und einer akzeptablen Verzögerung, um von der maximalen auf die reduzierte Fördergeschwindigkeit zu verzögern, wobei insbesondere ein starkes Pendeln der Gegenstände an den Hängeadaptern 33 vermieden werden soll.

## Patentansprüche

1. Vorrichtung zum hängenden Fördern von Gegenständen, wobei die Vorrichtung (1) umfasst
a. eine Fördertechnik (5), die eine Förderschiene (6) aufweist, entlang der die Gegenstände jeweils an einem Hängeadapter (33) hängend förderbar sind,
b. mehrere an die Fördertechnik (5) fördertechnisch gekoppelte Zwischenspeicher (9), die jeweils
i. als Umlaufspeicher ausgeführt sind mit einer geschlossenen Umlaufspeicherstrecke (11) und mit einem Zwischenspeicherförderer (12),
ii. einen Abführförderer (20) zum Fördern von Hängeadaptern (33) entlang einer Abführstrecke (26) des Zwischenspeichers (9) aufweisen,
iii. eine stromaufwärts des Abführförderers (20) angeordnete Vereinzelungseinheit (30) zum Vereinzeln der Hängeadapter (33) aufweisen,
iv. eine stromabwärts der Vereinzelungseinheit (30) angeordnete Identifikationseinheit (32) zum Identifizieren der aus dem Zwischenspeicher (9) abzuführenden Gegenstände und/oder Hängeadapter (33) aufweisen,
v. ein an der Abführstrecke (26) angeordnetes Weichenelement (25) zum Ausschleusen der abzuführenden Hängeadapter (33) aus dem Zwischenspeicher (9) in die Fördertechnik (5) aufweisen,
wobei die Vorrichtung sich dadurch auszeichnet, dass der Abführförderer (20)
- mit einer ersten Fördergeschwindigkeit (v₁) betreibbar ist, wenn kein abzuführender Hängeadapter (33) identifiziert worden ist,
- mit einer zweiten Fördergeschwindigkeit (v₂) betreibbar ist, wenn ein abzuführender Hängeadapter (33) identifiziert worden ist,
wobei die zweite Fördergeschwindigkeit (v₂) kleiner ist als die erste Fördergeschwindigkeit (v₁).

2. Vorrichtung gemäß Anspruch 1, **gekennzeichnet durch** einen Zuführförderer (17) des Zwischenspeichers (9) zum Zuführen von Gegenständen und/oder Hängeadaptern (33).

3. Vorrichtung gemäß einem der vorstehenden Ansprüche, **dadurch gekennzeichnet, dass** die Identifikationseinheit (32) im Bereich des Abführförderers (20) angeordnet ist.

4. Vorrichtung gemäß einem der vorstehenden Ansprüche, **gekennzeichnet durch** eine Regelungseinheit (13), die insbesondere mit dem Zuführförderer (17), dem Abführförderer (20) und/oder dem Zwischenspeicherförderer (12) in, insbesondere bidirektionaler, Signalverbindung steht.

5. Vorrichtung gemäß einem der vorstehenden Ansprüche, **gekennzeichnet durch** einen Wareneingang (3), an dem Gegenstände der Vorrichtung (1) zugeführt werden.

6. Vorrichtung gemäß einem der vorstehenden Ansprüche, **gekennzeichnet durch** mindestens eine Aufgabestation (4), an der die Gegenstände in die Vorrichtung (1) fördertechnisch aufgegeben werden.

7. Vorrichtung gemäß einem der vorstehenden Ansprüche, **gekennzeichnet durch** mindestens eine Sortiereinheit (8), mittels der die Reihenfolge der Gegenstände veränderbar ist.

8. Vorrichtung gemäß einem der vorstehenden Ansprüche, **gekennzeichnet durch** mindestens eine Packstation (23), an der die Gegenstände zu Aufträgen gepackt werden.

9. Vorrichtung gemäß einem der vorstehenden Ansprüche, **gekennzeichnet durch** einen Warenausgang (24), an dem zu Aufträgen zusammengefasste Gegenstände aus der Vorrichtung (1) abgeführt werden.

10. Vorrichtung gemäß einem der vorstehenden Ansprüche, **dadurch gekennzeichnet, dass** die Fördertechnik (5) jeweils mit einer Zuführstrecke (27) und mit einer Abführstrecke (26) an die einzelnen Zwischenspeicher (9) fördertechnisch gekoppelt ist.

11. Verfahren zum hängenden Fördern von Gegenständen umfassend die Verfahrensschritte
- hängendes Fördern der Gegenstände jeweils an einem Hängeadapter (33) entlang einer Förderschiene (6) einer Fördertechnik (5),
- Zuführen von Gegenständen in Zwischenspeicher (9), insbesondere mittels jeweils eines Zuführförderers (17),
- Zwischenspeichern der Gegenstände in den Zwischenspeichern (9), die jeweils als Umlaufspeicher ausgeführt sind mit einer geschlossenen Umlaufspeicherstrecke (11),
- Vereinzeln der Gegenstände im Zwischenspeicher (9) mittels einer Vereinzelungseinheit (30),
- Fördern der vereinzelten Gegenstände mittels des Abführförderers (20) entlang einer Abführstrecke (26) des Zwischenspeichers (9),
- Identifizieren der aus dem Zwischenspeicher (9) abzuführenden Gegenstände und/oder Hängeadapter (33) mittels einer stromabwärts der Vereinzelungseinheit (30) angeordnete Identifikationseinheit (32),
- Ausschleusen der abzuführenden Hängeadapter (33) aus dem Zwischenspeicher (9) in die Fördertechnik (5) mittels eines Weichenelements (25),
- wobei das Verfahren sich dadurch auszeichnet, dass der Abführförderer (20) mit einer ersten Fördergeschwindigkeit (v₁) betrieben wird, wenn kein abzuführender Hängeadapter (33) identifiziert worden ist,
- und, dass der Abführförderer (20) mit einer zweiten Fördergeschwindigkeit (v₂) betrieben wird, wenn ein abzuführender Hängeadapter (33) identifiziert worden ist, wobei die zweite Fördergeschwindigkeit (v₂) kleiner ist als die erste Fördergeschwindigkeit (v₁).

12. Verfahren gemäß Anspruch 11, **dadurch gekennzeichnet, dass,** die Identifikationseinheit (32) mit der Vereinzelungseinheit (30) signaltechnisch gekoppelt ist.

13. Verfahren gemäß Anspruch 11 oder 12, **gekennzeichnet durch** geregeltes Fördern der Gegenstände mittels einer Regelungseinheit (13), die insbesondere mit dem Zuführförderer (17), dem Abführförderer (20) und/oder dem Zwischenspeicherförderer (12) in, insbesondere bidirektionaler, Signalverbindung steht, insbesondere geschwindigkeitsgeregeltes Abführen der Gegenstände aus den Zwischenspeichern (9).

## Claims

1. An apparatus for the suspended conveyance of items, wherein said apparatus (1) comprises
a. a conveyor system (5) which has a conveyor rail (6) along which the items can each be conveyed suspended from an overhead adapter (33),
b. a plurality of buffer devices (9) coupled to the conveying system (5), which buffer device (9) each
i. are designed as circulating storage devices having a closed circulating storage line (11) and a conveyor (12),
ii. have a discharge conveyor (20) for conveying overhead adapters (33) along a discharge line (26) of the buffer device (9),
iii. have a separating unit (30) arranged upstream of the discharge conveyor (20) for separating the overhead adapters (33),
iv. have an identification unit (32) arranged downstream of the separating unit (30) for identifying the items and/or overhead adapters (33) to be discharged from the buffer device (9),
v. have a diverter element (25) arranged on the discharge line (26) for discharging the overhead adapters (33) to be discharged from the buffer device (9) into the conveyor system (5),
wherein the apparatus is **characterized in that** the discharge conveyor (20)
- is operable at a first conveying speed (v₁) when no overhead adapter (33) to be discharged has been identified,
- is operable at a second conveying speed (v₂) when an overhead adapter (33) to be discharged has been identified,
wherein the second conveying speed (v₂) is lower than the first conveying speed (v₁).

2. An apparatus according to claim 1, **characterized by** a feeding conveyor (17) of the buffer device (9) for feeding items and/or overhead adapters (33).

3. An apparatus according to any one of the preceding claims, **characterized in that** the identification unit (32) is arranged in the region of the discharge conveyor (20).

4. An apparatus according to any one of the preceding claims, **characterized by** a control unit (13) which is in signal connection, in particular bidirectional, with the feeding conveyor (17), the discharge conveyor (20) and/or the temporary storage conveyor (12).

5. An apparatus according to any one of the preceding claims, **characterized by** an incoming goods zone (3) in which items are fed to the apparatus (1).

6. An apparatus according to any one of the preceding claims, **characterized by** at least one feed station (4), at which the items are fed into the apparatus (1) by means of conveying technology.

7. An apparatus according to any one of the preceding claims, **characterized by** at least one sorting unit (8) by means of which the order of the items can be changed.

8. An apparatus according to any one of the preceding claims, **characterized by** at least one packing station (23) at which the items are packed into orders.

9. An apparatus according to any one of the preceding claims, **characterized by** an outgoing goods zone (24), at which items combined into orders are discharged from the apparatus (1).

10. An apparatus according to any one of the preceding claims, **characterized in that** the conveyor system (5) is coupled to the individual buffer devices (9) in terms of conveying technology in each case by means of a feeding line (27) and a discharge line (26).

11. A method for the suspended conveyance of items comprising the method steps of
- conveying the items suspended from an overhead adapter (33) along a conveyor rail (6) of a conveyor system (5),
- feeding items into buffer devices (9), in particular by means of one feeding conveyor (17) in each case,
- buffering the items in the buffer devices (9), each of which is designed as a circulating storage device with a closed circulating storage line (11),
- separating the items in the buffer device (9) by means of a separating unit (30),
- conveying the separated items by means of the discharge conveyor (20) along a discharge line (26) of the buffer device (9),
- identifying the items and/or overhead adapters (33) to be discharged from the buffer device (9) by means of an identification unit (32) arranged downstream of the separating unit (30),
- discharging the overhead adapters (33) to be discharged from the buffer device (9) into the conveyor system (5) by means of a diverter element (25),
- wherein the apparatus is **characterized in that** the discharge conveyor (20) is operated at a first conveying speed (v₁) when no overhead adapter (33) to be discharged has been identified,
- and **in that** the discharge conveyor (20) is operated at a second conveying speed (v₂) when an overhead adapter (33) to be discharged has been identified, wherein the second conveying speed (v₂) is lower than the first conveying speed (v₁).

12. A method according to claim 11, **characterized in that** the identification unit (32) is signal-coupled to the separating unit (30).

13. A method according to claim 11 or 12, **characterized by** controlled conveyance of the items by means of a control unit (13) which is in signal connection, in particular bidirectional, in particular with the feeding conveyor (17), the discharge conveyor (20) and/or the temporary storage conveyor (12), in particular speed-controlled discharge of the items from the buffer devices (9).

## Revendications

1. Dispositif de transport suspendu d'objets, le dispositif (1) comprenant
a. un système de transport (5) qui présente un rail de transport (6) le long duquel les objets peuvent être transportés en étant respectivement suspendus à un adaptateur de suspension (33),
b. plusieurs réservoirs intermédiaires (9) couplés par une technique de transport au système de transport (5), qui chacun présentent
i. sont réalisés sous forme de réservoirs à circulation avec une section de réservoir à circulation fermée (11) et avec un convoyeur de réservoir intermédiaire (12),
ii. un convoyeur d'évacuation (20) pour transporter des adaptateurs de suspension (33) le long d'une section d'évacuation (26) du réservoir intermédiaire (9),
iii. une unité de séparation (30) disposée en amont du convoyeur d'évacuation (20) pour séparer les adaptateurs de suspension (33),
iv. une unité d'identification (32) disposée en aval de l'unité de séparation (30) pour identifier les objets et/ou les adaptateurs de suspension (33) à évacuer du réservoir intermédiaire (9),
v. un élément d'aiguillage (25) disposé sur la section d'évacuation (26) pour l'éclusage des adaptateurs de suspension (33) à évacuer du réservoir intermédiaire (9) dans le système de transport (5),
dans lequel le dispositif est **caractérisé en ce que** le convoyeur d'évacuation (20)
- est utilisable à une première vitesse de transport (v₁) lorsqu'aucun adaptateur de suspension (33) à évacuer n'a été identifié,
- est utilisable à une deuxième vitesse de transport (v₂) lorsqu'un adaptateur de suspension (33) à évacuer a été identifié,
la deuxième vitesse de transport (v₂) étant inférieure à la première vitesse de transport (v₁).

2. Dispositif selon la revendication 1, **caractérisé par** un convoyeur d'alimentation (17) du réservoir intermédiaire (9) pour l'alimentation d'objets et/ou d'adaptateurs de suspension (33).

3. Dispositif selon l'une quelconque des revendications précédentes, **caractérisé en ce que** l'unité d'identification (32) est disposée dans la zone du convoyeur d'évacuation (20).

4. Dispositif selon l'une quelconque des revendications précédentes, **caractérisé par** une unité de régulation (13) qui est en particulier en liaison de signalisation, en particulier bidirectionnelle, avec le convoyeur d'alimentation (17), le convoyeur d'évacuation (20) et/ou le convoyeur de réservoir intermédiaire (12).

5. Dispositif selon l'une quelconque des revendications précédentes, **caractérisé par** une entrée de marchandises (3), à laquelle des objets sont alimentés au dispositif (1).

6. Dispositif selon l'une quelconque des revendications précédentes, **caractérisé par** au moins une station de chargement (4), à laquelle les objets sont introduits dans le dispositif (1) par une technique de transport.

7. Dispositif selon l'une quelconque des revendications précédentes, **caractérisé par** au moins une unité de tri (8) au moyen de laquelle l'ordre des objets peut être modifié.

8. Dispositif selon l'une quelconque des revendications précédentes, **caractérisé par** au moins un poste d'emballage (23) au niveau duquel les objets sont emballés pour former des commandes.

9. Dispositif selon l'une quelconque des revendications précédentes, **caractérisé par** une sortie de marchandises (24), à laquelle des objets regroupés en commandes sont évacués du dispositif (1).

10. Dispositif selon l'une quelconque des revendications précédentes, **caractérisé en ce que** le système de transport (5) est couplé, par une technique de transport, respectivement avec une section d'alimentation (27) et avec une section d'évacuation (26) aux différents réservoirs intermédiaires (9).

11. Procédé de transport suspendu d'objets comprenant les étapes de procédé suivantes
- transport suspendu des objets respectivement sur un adaptateur de suspension (33) le long d'un rail de transport (6) d'un système de transport (5),
- alimentation d'objets dans des réservoirs intermédiaires (9), en particulier au moyen d'un convoyeur d'alimentation (17) respectif,
- stockage intermédiaire des objets dans les réservoirs intermédiaires (9), qui sont réalisés chacun sous forme de réservoir de circulation avec une section de réservoir de circulation fermée (11),
- séparation des objets dans le réservoir intermédiaire (9) au moyen d'une unité de séparation (30),
- transport des objets séparés au moyen du convoyeur d'évacuation (20) le long d'une section d'évacuation (26) du réservoir intermédiaire (9),
- identification des objets et/ou des adaptateurs de suspension (33) à évacuer du réservoir intermédiaire (9) au moyen d'une unité d'identification (32) disposée en aval de l'unité de séparation (30),
- évacuation des adaptateurs de suspension (33) à évacuer du réservoir intermédiaire (9) dans le système de transport (5) au moyen d'un élément d'aiguillage (25),
- dans lequel le procédé est **caractérisé en ce que** le convoyeur d'évacuation (20) est actionné à une première vitesse de transport (v₁) lorsqu'aucun adaptateur de suspension (33) à évacuer n'a été identifié,
- et **en ce que** le convoyeur d'évacuation (20) est actionné à une deuxième vitesse de transport (v₂) lorsqu'un adaptateur de suspension (33) à évacuer a été identifié, la deuxième vitesse de transport (v₂) étant inférieure à la première vitesse de transport (v₁).

12. Procédé selon la revendication 11, **caractérisé en ce que** l'unité d'identification (32) est couplée à l'unité de séparation (30) par une technique de signalisation.

13. Procédé selon la revendication 11 ou 12, **caractérisé par un** transport régulé des objets au moyen d'une unité de régulation (13), qui est en particulier en liaison de signalisation, en particulier bidirectionnelle, avec le convoyeur d'alimentation (17), le convoyeur d'évacuation (20) et/ou le convoyeur de réservoir intermédiaire (12), en particulier une évacuation régulée en vitesse des objets hors des réservoirs intermédiaires (9).
